# EUROPEAN PATENT SPECIFICATION

(11) **EP 0 601 819 B1**
(45) Date of publication and mention of the grant of the patent: **05.08.1998**
(21) Application number: 93309776.8
(22) Date of filing: 06.12.1993
(51) Int. Cl.: H04N 5/45

(54) **Image compression apparatus**
Bildkomprimierungsvorrichtung
Appareil de compression d'image

(30) Priority: 09.12.1992 JP 329090/92
(43) Date of publication of application: 15.06.1994
(73) Proprietor: MATSUSHITA ELECTRIC INDUSTRIAL CO., LTD., Kadoma-shi, Osaka-fu, 571 (JP)
(72) Inventor: Nakanishi, Masahiro, Midori-ku, Yokohama-shi (JP)
(74) Representative: Votier, Sidney David

(56) References cited:
- EP-A- 0 438 782

## Description

### BACKGROUND OF THE INVENTION

The present invention relates to an image compression apparatus for use in a video special effect apparatus of a television receiver or the like.

It is customary that, when a television picture is compressed in area and superimposed upon one portion of a picture screen of the television receiver, the number of scanning lines in the vertical direction is decimated and the number of pixels in the horizontal direction is decimated in response to a compression ratio, data that are not decimated are temporarily stored in a memory and then read out therefrom.

A conventional image compression apparatus of this kind includes a clock decimating circuit for decimating clocks in every vertical or horizontal direction in response to a compression ratio and uses an averaging method for averaging image data on the basis of a continuity of decimated clocks.

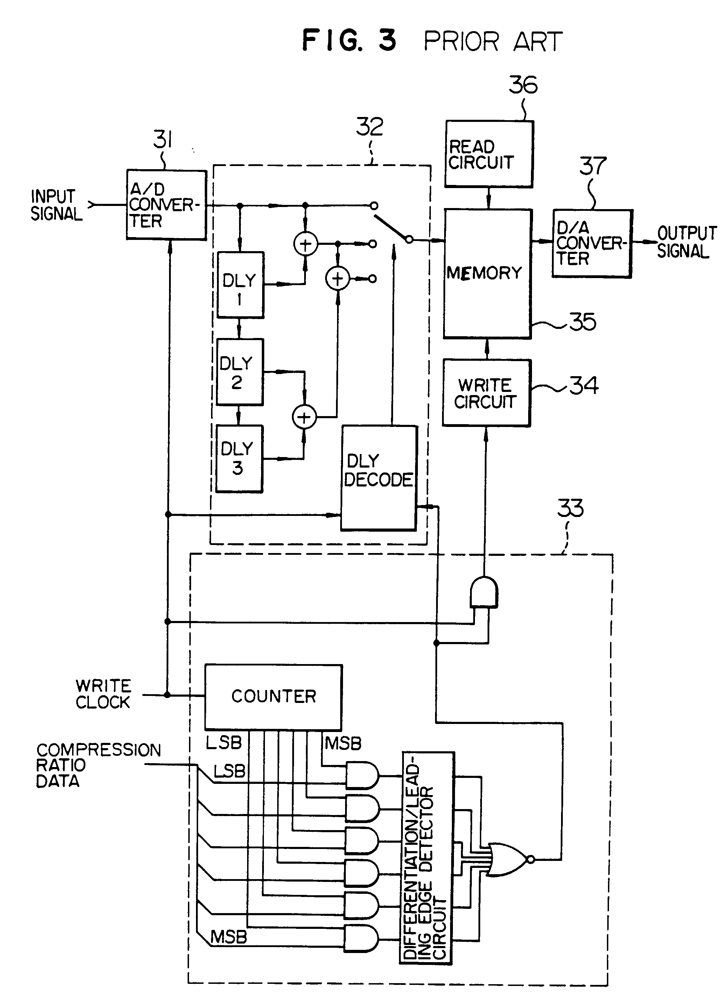

FIG. 3 of the accompanying drawings is a schematic block diagram showing a circuit arrangement of a conventional image compression apparatus. As shown in FIG. 3, this conventional image compression apparatus comprises an A/D (analog-to-digital) converter 31 for converting an input image signal into digital image data, a clock decimating circuit 33 for generating a decimation signal and decimation clock on the basis of a write clock and compression ratio data, an averaging circuit 33 for averaging the image data in accordance with a remaining signal that is not decimated, a memory 35 for sequentially storing therein an output of the averaging circuit 32 in response to a remaining clock that is not decimated, a read circuit 36 for reading out the image data stored in the memory 35 and a D/A (digital-to-analog) converter 37 for converting the read-out image data into an analog signal. According to the conventional image compression apparatus thus arranged, a reduced image can be obtained with an arbitrary compression ratio.

However, the above-mentioned conventional image compression apparatus uses different averaging methods when an image is reduced with compression ratios of up to 1/2 in which decimated clocks are not continuous and when an image is reduced with compression ratios of less than 1/2 in which decimated clocks are continuous. Therefore, when an image compression ratio is changed successively, there is then the disadvantage that an image reduced with a compression ratio of less than 1/2 looks unnatural.

In accordance with the present invention, there is provided an image compression apparatus as specified in Claim 1 hereinafter.

An object of the present invention is to provide an excellent image compression apparatus which can reduce an image with continuous compression ratios more naturally by using an averaging method that is not related to a continuity of clocks.

In order to attain the aforesaid object, an image compression apparatus comprises an A/D conversion unit for converting an image signal into image data in synchronism with a write clock, a memory unit for temporarily storing therein the image data, a clock decimation unit for decimating a write clock in response to a compression ratio, a selection unit for determining an averaging method in response to a compression ratio, an averaging unit for averaging the image data by the averaging method determined by the selection unit, a write unit for outputting a write command in accordance with a remaining write clock that is not decimated, a read unit for reading out the image data from the memory unit, and a D/A conversion unit for converting the image data into an analog signal.

According to this image compression apparatus, when data representing a desired compression ratio is input thereto, a decimation clock corresponding to the desired compression ratio is generated, and an amount of image data to be averaged is determined on the basis of the compression ratio. Thus, decimated image data that are not written in the memory are averaged and then written in the memory so that an image can be reduced with an arbitrary compression ratio while the image can be prevented from becoming unnatural when reduced.

### BRIEF DESCRIPTION OF THE DRAWINGS

FIG. 1 is a schematic block diagram showing a circuit arrangement of an image compression apparatus according to an embodiment of the present invention;
FIG. 2 is a circuit diagram showing an example of an adder circuit used in the image compression apparatus shown in FIG. 1; and
FIG. 3 is a schematic block diagram showing a circuit arrangement of an image compression apparatus according to the prior art.

### DESCRIPTION OF THE PREFERRED EMBODIMENT

An image compression apparatus according to an embodiment of the present invention will hereinafter be described with reference to the accompanying drawings.

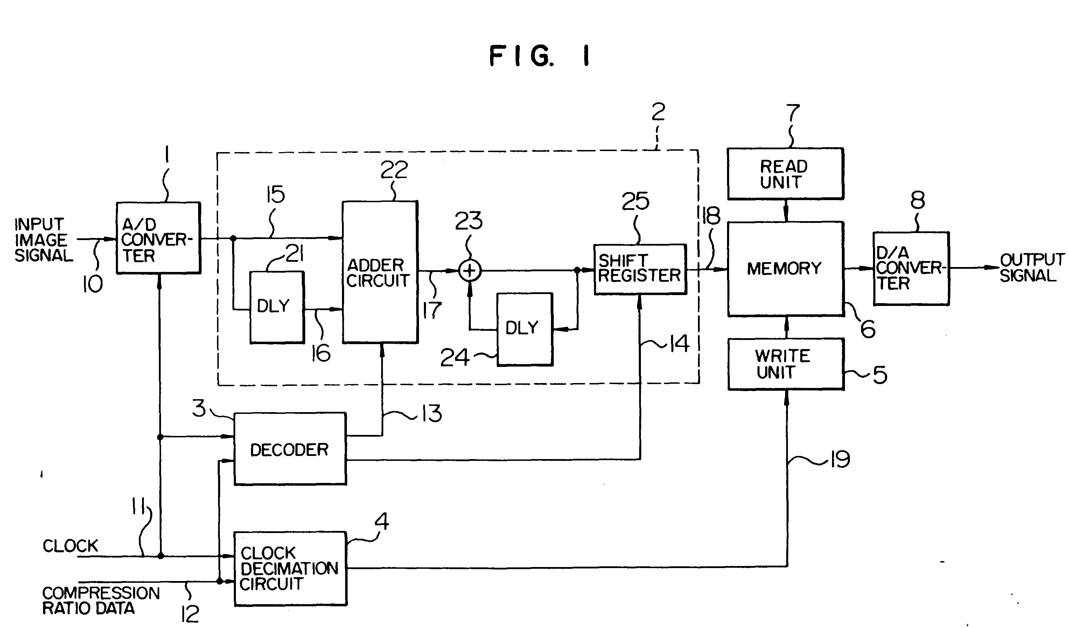

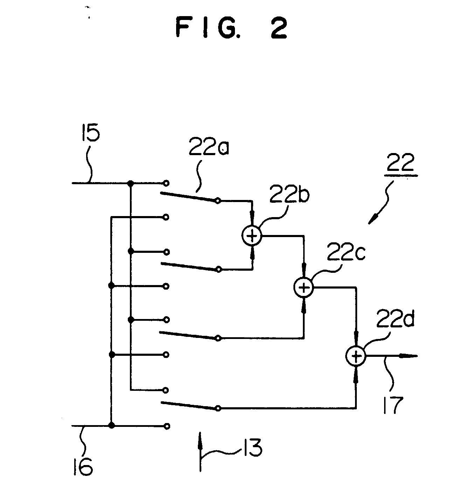

FIG. 1 is a schematic block diagram showing a circuit arrangement of an image compression apparatus according to an embodiment of the present invention. FIG. 2 is a circuit diagram showing an example of an adder circuit used in the image compression apparatus shown in FIG. 1.

As shown in FIG. 1, an output 15 from an A/D converter 1 that digitizes an input image signal 10 is input to an averaging circuit 2 which averages image data. In the averaging circuit 2, a delay circuit (DLY) 21 is supplied with the output from the A/D converter 1 and delays data by a predetermined period. An adder circuit 22 is adapted to average the output data of the A/D converter 1 and output data 16 of the delay circuit 21. Output data 17 from the adder circuit 22 is input to a full adder 23. Output data of a delay circuit (DLY) 24 that delays the output data of the full adder 23 by a predetermined period and the output data 17 of the adder circuit 22 are added by the full adder 23 and then input to a shift register 25. The averaging circuit 2 is arranged as described above.

There is shown a decoder (selection unit) 3 which determines and outputs an averaging method 13 of the adder circuit 22 and a shift number 14 of the shift register 25 on the basis of compression ratio data 12. There is shown a clock decimation circuit 4 which obtains clock decimation information from the compression ratio data to thereby decimate a clock 11. A write unit 5 that writes data on the basis of a remaining clock that is not decimated supplies a write command to a memory 6 which temporarily stores therein image data. A read unit 7 reads out image data from the memory 6, and a D/A converter 8 converts the image data thus read out from the memory 6 into an analog signal.

Operation of the image compression apparatus thus arranged will be described below.

When the compression ratio data 12 is input to the image compression apparatus of the present invention, the decoder 3 separates the input compression ratio data into compression ratio data representing a compression ratio of 1/1 to 1/2 and compression ratio data representing a compression ratio of 1/2ⁿ (n = 0, 1, 2, ...) the products of which become the compression ratio data 12. When the compression ratio data 12 represents a compression ratio of 3/8, for example, 3/8 = (6/8) × (1/2) = (3/4) × (1/2). Thus, the decoder 3 outputs the averaging method 13 of the adder circuit 22 corresponding to the compression ratio of 1/1 to 1/2 and the shift number (n) 14 of the shift register 25 for reducing an image with the compression ratio of 1/2ⁿ.

As shown in FIG. 2, the adder circuit 22 comprises a switch 22a which is changed over by the averaging method 13, and full adders 22b, 22c and 22d to thereby average the image data digitized by the A/D converter 1 and the data 16 which results from delaying the image data 15 by the predetermined period by the delay circuit (DLY) 21. Referring back to FIG. 1, the averaged data 17 is added to the data from the delay circuit (DLY) 24 n times by the full adder 23, and the added result from the full adder 23 is rightwardly shifted by n bits by the shift register 25, for being output as an averaged output 18 thereby.

As described above, according to the embodiment of the present invention, any compression ratio data are expressed as (compression ratio of 1/1 to 1/2) × (compression ratio of 1/2ⁿ) and the averaging processing corresponding to such compression ratio data is effected so that a natural and continuous reduced image can be obtained.

The adder circuit 22 shown in FIG. 2 can effect the compression of 1/1 to 1/2 with a higher accuracy if the adder circuit 22 is modified in such a way as to further add switches and full adders or the like thereto.

As set forth, according to the present invention, it is possible to realize an excellent image compression apparatus which can reduce an image with continuous compression ratios while a reduced image can be prevented from becoming unnatural when displayed. In other words, image data of a television video signal can be reduced with continuous compression ratios by the simplified circuit arrangement while a reduced image can be prevented from becoming unnatural when displayed.

## Claims

1. An image compression apparatus for compressing an input image signal in accordance with a compression ratio, said apparatus comprising:
A/D converting means (1) for converting said input image signal into image data in synchronism with a write clock signal;
averaging means (2) for averaging the image data output from said A/D converting means (1) corresponding to said compression ratio;
memory means (6) for temporarily storing therein the averaged image data output from said averaging means (2);
clock decimation means (4) for decimating said write clock signal in accordance with said compression ratio;
write means (5) for outputting a write command to said memory means (6) in response to the decimated write clock signal output from said clock decimation means (4);
read means (7) for reading out the stored image data from said memory means (6); and
D/A converting means (8) for converting the read out image data into an analog image signal,
characterised in that:
said apparatus further comprises averaging control means (3) for separating said compression ratio into a first compression ratio of 1/2 to 1 and a second compression ratio of 1/2ⁿ where n represents an integer not smaller than zero, and for obtaining first and second averaging control signals which correspond to said first and second compression ratios respectively; and
said averaging means (2) includes a first averaging section (21, 22) for averaging the image data output from said A/D converting means (1) in accordance with said first averaging control signal and a second averaging section (23, 24, 25) for further averaging the averaged image data output from said first averaging section (21, 22) in accordance with said second averaging control signal.

2. An image compression apparatus according to Claim 1, wherein said first averaging section (21, 22) includes:
a delay circuit (21) for delaying the image data output from said A/D converting means (1);
a plurality of select switches (22a) each for selecting one of the image data output from said A/D converting means (1) and the delayed image data output from said delay circuit (21) in accordance with said first averaging control signal; and
a plurality of adder circuits (22b, 22c, 22d) for adding outputs of said plurality of select switches (22a).

3. An image compression apparatus according to Claim 1 or 2, wherein said second averaging section (23, 24, 25) includes:
an adder circuit (23) for adding the averaged image data output from said first averaging section (21, 22) and second input data;
a delay circuit (24) for delaying the image data output from said adder circuit (23) to supply said adder circuit (23) with the delayed image data as said second input data; and
a shift register (25) for shifting each bit of the delayed image data output from said delay circuit (24) in accordance with said second averaging control signal.

## Patentansprüche

1. Bildkompressionsvorrichtung zum Komprimieren eines Eingangsbildsignals in Übereinstimmung mit einem Kompressionsverhältnis, wobei die Vorrichtung aufweist:
einen A/D-Wandler (1), welcher das Eingangsbildsignals synchron mit einem Schreibtaktsignal in Bilddaten umwandelt;
eine Durchschnittswertbildungseinrichtung (2), welche die vom A/D-Wandler (1) ausgegebenen Bilddaten entsprechend dem Kompressionsverhältnis mittelt;
eine Speichereinrichtung (6), welche die von der Durchschnittswertbildungseinrichtung (2) ausgegebenen gemittelten Bilddaten vorübergehend speichert;
eine Taktdezimierungseinrichtung (4), welche das Schreibtaktsignal in Übereinstimmung mit dem Kompressionsverhältnis dezimiert;
eine Schreibeinrichtung (5), welche an die Speichereinrichtung (6) einen Schreibbefehl ausgibt, und zwar reagierend auf das von der Taktdezimierungseinrichtung (4) ausgegebene dezimierte Schreibtaktsignal;
eine Leseeinrichtung (7), welche die gespeicherten Bilddaten aus der Speichereinrichtung (6) ausliest; und
einen D/A-Wandler (8), welcher die ausgelesenen Bilddaten in ein analoges Bild umwandelt,
dadurch gekennzeichnet, daß:
die Vorrichtung weiter aufweist: eine Durchschnittswertbildungs-Steuereinrichtung (3), welche das Kompressionsverhältnis in ein erstes Kompressionsverhältnis von 1/2 bis 1 und ein zweites Kompressionsverhältnis von 1/2ⁿ aufteilt, wobei n eine ganze Zahl nicht kleiner Null repräsentiert, und ein erstes und ein zweites Durchschnittswertbildungs-Steuersignal liefert, welches dem ersten bzw. dem zweiten Kompressionsverhältnis entspricht; und
die Durchschnittswertbildungseinrichtung (2) ein erstes Durchschnittswertbildungsglied (21, 22), welches die vom A/D-Wandler (1) ausgegebenen Bilddaten in Übereinstimmung mit dem ersten Durchschnittswertbildungs-Steuersignal mittelt, sowie ein zweites Durchschnittswertbildungsglied (23, 24, 25) beinhaltet, welches die vom ersten Durchschnittswertbildungsglied (21, 22) ausgegebenen gemittelten Bilddaten in Übereinstimmung mit dem zweiten Durchschnittswertbildungs-Steuersignal weiter mittelt.

2. Bildkompressionsvorrichtung nach Anspruch 1, wobei das erste Durchschnittswertbildungsglied (21, 22) beinhaltet:
eine Verzögerungsschaltung (21), welche die vom A/D-Wandler (1) ausgegebenen Bilddaten verzögert;
eine Mehrzahl von Auswählschaltern (22a), von denen jeder entweder die vom A/D-Wandler (1) ausgegebenen Bilddaten oder die von der Verzögerungsschaltung (21) ausgegebenen verzögerten Bilddaten auswählt, und zwar in Übereinstimmung mit dem ersten Durchschnittswertbildungs- Steuersignal; und
eine Mehrzahl von Addierschaltungen (22b, 22c, 22d), welche Ausgangsgrößen von der Mehrzahl von Auswählschaltern (22a) addiert.

3. Bildkompressionsvorrichtung nach Anspruch 1 oder 2, wobei das zweite Durchschnittswertbildungsglied (23, 24, 25) beinhaltet:
eine Addierschaltung (23 ), welche die vom ersten Durchschnittswertbildungsglied (21, 22) ausgegebenen gemittelten Bilddaten und zweite Eingangsdaten addiert;
eine Verzögerungsschaltung (24), welche die von der Addierschaltung (23) ausgegebenen Bilddaten verzögert, um der Addierschaltung (23) die verzögerten Bilddaten als zweite Eingangsdaten zuzuführen; und
ein Schieberegister (25), welches jedes Bit der von der Verzögerungsschaltung (24) ausgegebenen verzögerten Bilddaten in Übereinstimmung mit dem zweiten Durchschnittswertbildungs-Steuersignal verschiebt.

## Revendications

1. Appareil de compression d'image pour compresser un signal d'image en entrée en conformité avec un rapport de compression, ledit appareil comprenant :
un moyen de conversion A/N (1) pour convertir ledit signal d'image en entrée en données d'image en synchronisme avec un signal d'horloge d'écriture ;
un moyen d'établissement de moyenne (2) pour mettre en moyenne la sortie des données d'image à partir dudit moyen de conversion A/N (1) correspondant audit rapport de compression ;
un moyen de mémoire (6) pour y mémoriser temporairement les données d'image mises en moyenne en sortie dudit moyen d'établissement de moyenne (2) ;
un moyen de division d'horloge (4) pour diviser ledit signal d'horloge d'écriture en conformité avec ledit rapport de compression ;
un moyen d'écriture (5) pour délivrer un ordre d'écriture audit moyen de mémoire (6) en réponse au signal d'horloge d'écriture divisé en sortie dudit moyen de division d'horloge (4) ;
un moyen de lecture (7) pour extraire les données d'image mémorisées dudit moyen de mémoire (6) ; et
un moyen de conversion N/A (8) pour convertir les données d'image extraites en un signal d'image analogique,
caractérisé en ce que :
ledit appareil comprend en outre un moyen de commande d'établissement de moyenne (3) pour séparer ledit rapport de compression en un premier rapport de compression de ½ à 1 et en un second rapport de compression de 1/2ⁿ où n représente un nombre entier non inférieur à zéro et pour obtenir des premier et second signaux de commande d'établissement de moyenne qui correspondent auxdits premier et second rapports de compression respectivement ; et
ledit moyen d'établissement de moyenne (2) comprend une première section d'établissement de moyenne (21, 22) pour établir une moyenne des données d'image délivrées par ledit moyen de conversion A/N (1) en conformité avec le premier signal de commande d'établissement de moyenne et une seconde section d'établissement de moyenne (23, 24, 25) pour établir en outre une moyenne des données d'image mises en moyenne délivrées par ladite première section d'établissement de moyenne (21, 22) en conformité avec ledit second signal de commande d'établissement de moyenne.

2. Appareil de compression d'image selon la revendication 1, dans lequel ladite première section d'établissement de moyenne (21, 22) comprend :
un circuit à retard (21) pour retarder les données d'image en sortie dudit moyen de conversion A/N (1) ;
une pluralité de commutateurs sélectionneurs (22) chacun pour sélectionner l'une des données d'image en sortie dudit moyen de conversion A/N (1) et lesdites données d'image retardées délivrées par ledit circuit à retard (21) en conformité avec ledit premier signal de commande d'établissement de moyenne ; et
une pluralité de circuits additionneurs (22b, 22c, 22d) pour additionner les sorties de ladite pluralité de commutateurs sélectionneurs (22a).

3. Appareil de compression d'image selon la revendication 1 ou 2, dans lequel ladite seconde section d'établissement de moyenne (23, 24, 25) comprend :
un circuit additionneur (23) pour additionner les données d'image mises en moyenne délivrées par ladite première section d'établissement de moyenne (21, 22) et les secondes données d'entrée ;
un circuit à retard (24) pour retarder les données d'image délivrées par ledit circuit additionneur (23) pour appliquer audit circuit additionneur (23) lesdites données d'image retardées sous la forme desdites secondes données d'entrée ; et
un registre à décalage (25) pour décaler chaque bit des données d'image retardées délivrées par ledit circuit à retard (24) en conformité avec ledit second signal de commande d'établissement de moyenne.
